# EUROPÄISCHE PATENTSCHRIFT

(11) **EP 3 339 706 B1**
(45) Veröffentlichungstag und Bekanntmachung des Hinweises auf die Patenterteilung: **04.08.2021**
(21) Anmeldenummer: 18153669.9
(22) Anmeldetag: 11.06.2015
(51) Int. Cl.: F16L 19/02, F16L 19/00, F16L 19/025, B05B 15/65

(54) **KUPPLUNGSANORDNUNG FÜR SCHRAUBKUPPLUNG**
COUPLING ASSEMBLY FOR SCREW COUPLING
SYSTÈME D'ACCOUPLEMENT POUR BAGUE FILETÉE

(30) Priorität: 20.06.2014 DE 102014108699
(43) Veröffentlichungstag der Anmeldung: 27.06.2018
(62) Teilanmeldung aus: 15730443.7
(73) Patentinhaber: Alfred Kärcher SE & Co. KG, 71364 Winnenden (DE)
(72) Erfinder: LANGER, Christian, 86720 Nördlingen (DE); WEISS, Benjamin, 71364 Winnenden (DE); SEITTER, Ralph, 71522 Backnang (DE)
(74) Vertreter: Hoeger, Stellrecht & Partner Patentanwälte mbB

(56) Entgegenhaltungen:
- WO-A1-00/77434
- US-A- 5 058 930
- US-A1- 2013 161 941

## Beschreibung

Die Erfindung betrifft eine Kupplungsanordnung für eine Schraubkupplung für Flüssigkeitsleitungen einer Hochdruckreinigungseinrichtung mit den Merkmalen des Oberbegriffes von Patentanspruch 1.

Schraubkupplungen kommen bei Hochdruckreinigungseinrichtungen zum Einsatz, um Flüssigkeitsleitungen dicht und lösbar miteinander verbinden zu können. Mit Hilfe einer Schraubkupplung kann beispielsweise ein Hochdruckschlauch mit dem Druckauslass eines Hochdruckreinigungsgeräts verbunden werden, und es kann auch eine lösbare und flüssigkeitsdichte Verbindung zwischen dem Druckschlauch und einer Flüssigkeitsabgabeeinrichtung, beispielsweise einer Spritzpistole, hergestellt werden. Auch eine lösbare und flüssigkeitsdichte Verbindung zwischen einer Spritzpistole und einer Sprühlanze sowie zwischen einer Sprühlanze und einer Sprühdüse kann mit Hilfe derartiger Schraubkupplungen hergestellt werden. Die Verbindungen können vom Benutzer bei Bedarf auch wieder gelöst werden.

Die Schraubkupplungen weisen eine erste Kupplungsanordnung und eine zweite Kupplungsanordnung auf, die miteinander verschraubt werden können. Die erste Kupplungsanordnung umfasst ein erstes Steckteil, das zur Herstellung einer flüssigkeitsdichten und lösbaren Verbindung unter Zwischenlage eines Dichtrings mit einem komplementär zum ersten Steckteil ausgestalteten zweiten Steckteil der zweiten Kupplungsanordnung steckbar verbindbar ist. Das erste Steckteil kann beispielsweise als Nippel und das zweite Steckteil kann beispielsweise als komplementär zum Nippel ausgebildete Hülse ausgestaltet sein, wobei der Nippel in die Hülse einführbar und mittels eines Dichtrings flüssigkeitsdicht mit der Hülse verbindbar ist. Der Dichtring kann in einer äußeren Ringnut des Nippels oder auch in einer inneren Ringnut der Hülse angeordnet sein. Um zu gewährleisten, dass sich die beiden Steckteile nicht unbeabsichtigt voneinander lösen können, weisen die erste Kupplungsanordnung und die zweite Kupplungsanordnung miteinander zusammenwirkende Verbindungsteile auf mit jeweils einem Gewinde, so dass die Kupplungsanordnungen miteinander verschraubt werden können.

Kupplungsanordnungen mit einem Steckteil, das zur Herstellung einer flüssigkeitsdichten und lösbaren Verbindung unter Zwischenlage eines Dichtrings mit einem komplementär ausgestalteten Steckteil einer zweiten Kupplungsanordnung der Schraubkupplung steckbar verbindbar ist, und mit einem Verbindungsteil mit einem Gewinde, das mit einem komplementär ausgestalteten Gewinde der zweiten Kupplungsanordnung verschraubbar ist, sind beispielsweise aus den Veröffentlichungen DE 91 02 402 U1 und WO 96/08669 A1 bekannt. Bei diesen Kupplungsanordnungen ist das Gewinde an einem als Überwurfring ausgestalteten Verbindungsteil angeordnet. Das Gewinde ist üblicherweise eingängig ausgestaltet und hat einen kleinen Steigungswinkel, der häufig etwa 2° beträgt. Derartige Gewinde sind selbsthemmend und stellen sicher, dass sich das erste Steckteil selbst dann nicht unbeabsichtigt vom zweiten Steckteil lösen kann, wenn die von der Hochdruckreinigungseinrichtung geförderte Reinigungsflüssigkeit einen hohen Druck aufweist. Zur Herstellung einer flüssigkeitsdichten Schraubverbindung zwischen den Kupplungsanordnungen ist es allerdings erforderlich, die ineinander greifenden Gewinde über mehrere Umdrehungen relativ zueinander zu verdrehen. Dies macht das Herstellen und Lösen der Schraubverbindung zeitaufwändig und erschwert deren Handhabung.

Eine Kupplungsanordnung mit den Merkmalen des Oberbegriffes von Patentanspruch 1 ist aus der Veröffentlichung US 2013/0161941 A1 bekannt. Bei dieser Kupplungsanordnung bildet das Verbindungsteil einen Überwurfring mit einem mehrgängigen Innengewinde, das mit einem komplementär ausgestalteten Außengewinde einer zweiten Kupplungsanordnung verschraubbar ist. An das Innengewinde schließt sich eine Ringnut an, deren Länge in axialer Richtung einem kleinen Bruchteil der Länge des Innengewindes entspricht. An diese Ringnut schließt sich in axialer Richtung eine zylindrische Ringfläche an, die ein Sicherungselement der zweiten Kupplungsanordnung hintergreifen und dadurch ein Lösen der Schraubverbindung verhindern kann.

Aus der Veröffentlichung US 5,058,930 A ist eine Kupplungsanordnung bekannt, bei der ebenfalls ein Überwurfring zum Einsatz kommt. An seiner Stirnseite trägt der Überwurfring axial ausgerichtete, aufspreizbare Finger, die an ihrem freien Ende jeweils eine radial nach innen gerichtete Spitze tragen. Beim Verschrauben des Überwurfrings mit einer zweiten Kupplungsanordnung gleiten die Finger an einer Rampe der zweiten Kupplungsanordnung entlang, bis die Spitzen eine sich in Fügerichtung an die Rampe anschließende Vertiefung erreichen und in diese eintauchen.

Aus der Veröffentlichung WO 00/77434 A1 ist eine weitere Kupplungsanordnung bekannt mit einem Verbindungsteil nach Art eines Überwurfrings, das kein Verklemmen sondern ein Einrasten der Kupplungsteilen ermöglicht.

Aufgabe der vorliegenden Erfindung ist es, eine Kupplungsanordnung der eingangs genannten Art derart weiterzubilden, dass sie innerhalb kürzerer Zeit mit einer zweiten Kupplungsanordnung flüssigkeitsdicht und lösbar verbunden werden kann, wobei sichergestellt ist, dass die Verbindung sich nicht unbeabsichtigt löst.

Diese Aufgabe wird durch eine Kupplungsanordnung mit den Merkmalen von Patentanspruch 1 gelöst.

Bei der erfindungsgemäßen Kupplungsanordnung kommt ein mehrgängiges Gewinde zum Einsatz, das heißt ein Gewinde, bei dem mehrere Gewindegänge parallel zueinander wendelförmig um die Gewindelängsachse verlaufen. Der Einsatz eines mehrgängigen Gewindes hat den Vorteil, dass das Gewinde eine hohe Steigung aufweisen kann, so dass durch eine einzige Umdrehung eine große axiale Bewegung erreicht werden kann. Eine auf das Gewinde einwirkende Last wird gleichzeitig von mehreren Gewindegängen aufgenommen. Es kann beispielsweise vorgesehen sein, dass das mehrgängige Gewinde bei einer einzigen Umdrehung eine axiale Bewegung von mindestens 5 mm, insbesondere eine axiale Bewegung von 6 mm ausführt. Dies erleichtert die Handhabung der Kupplungsanordnung beim Herstellen einer flüssigkeitsdichten Verbindung. Der Benutzer muss bei einer derartigen Ausgestaltung der Kupplungsanordnung das Gewinde beispielsweise nur einmal um 360° relativ zum Gewinde der zweiten Kupplungsanordnung verdrehen und durch diese eine Umdrehung wird das Steckteil bereits so weit in das komplementär ausgestaltete Steckteil der zweiten Kupplungsanordnung eingefügt, dass zuverlässig eine flüssigkeitsdichte Verbindung zwischen den Steckteilen erzielt wird.

Mehrgängige Gewinde mit einer verhältnismäßig großen Steigung ermöglichen zwar mit einer einzigen Umdrehung eine große axiale Bewegung, sie sind aber häufig nicht selbsthemmend, da der Steigungswinkel relativ groß ist. Bei der erfindungsgemäßen Kupplungsanordnung kommt deshalb zusätzlich zum mehrgängigen Gewinde ein Klemmelement zum Einsatz, das bezogen auf die Gewindelängsachse fluchtend zum Gewinde angeordnet ist und mit einem komplementär ausgestalteten Klemmelement der zweiten Kupplungsanordnung verklemmt werden kann, indem die beiden Klemmelemente in axialer Richtung ineinander geführt werden.

Die Klemmelemente können sich in axialer Richtung überlappen, wobei sie sich gegenseitig verklemmen und dadurch ein unbeabsichtigtes Trennen der Kupplungsanordnungen verhindern.

Das mehrgängige Gewinde mit einer verhältnismäßig großen Steigung gibt dem Benutzer die Möglichkeit, innerhalb sehr kurzer Zeit eine flüssigkeitsdichte Verbindung herzustellen, wobei durch eine einzige Gewindeumdrehung eine große axiale Bewegung erreicht werden kann, und durch den Einsatz des Klemmelements kann trotz des nicht zwingend selbsthemmend ausgestalteten Gewindes ein unbeabsichtigtes Lösen der Verbindung verhindert werden.

Bei der erfindungsgemäßen Kupplungsanordnung ist in axialer Richtung zwischen dem Gewinde und dem Klemmelement ein Schmutzaufnahmeraum angeordnet. Dies hat den Vorteil, dass Schmutzpartikel, die sich bei Nichtgebrauch der Kupplungsanordnung im Bereich des Gewindes ablagern, beim Verschrauben der Kupplungsanordnung mit einer zweiten, komplementär ausgestalteten Kupplungsanordnung nicht ohne weiteres aus dem Gewinde in den Bereich des Klemmelements verschoben werden. Schmutzpartikel, die sich im Bereich des Gewindes an das Verbindungsteil angelagert haben, werden beim Verschrauben der Kupplungsanordnung aus dem Bereich des Gewindes in den sich in axialer Richtung an das Gewinde anschließenden Schmutzaufnahmeraum überführt, so dass sie nicht unmittelbar zum Klemmelement gelangen und die Klemmwirkung nicht beeinträchtigen können.

Der Schmutzaufnahmeraum ist als Ringraum ausgestaltet, der koaxial zur Gewindelängsachse ausgerichtet ist. Der Ringraum kann beispielsweise in Form einer Ringnut ausgebildet sein, die im Bereich zwischen dem Gewinde und dem Klemmelement in das Verbindungsteil eingeformt ist.

Die Länge des Schmutzaufnahmeraums in axialer Richtung beträgt das 0,7-fache bis 1,3-fache der Länge des Gewindes. Insbesondere kann vorgesehen sein, dass der Schmutzaufnahmeraum ungefähr gleich lang ist wie das Gewinde.

Die Kupplungsanordnung ist günstigerweise werkzeuglos mit einer komplementär ausgestalteten Kupplungsanordnung der Schraubkupplung verbindbar. Der Benutzer kann somit ohne Werkzeug eine flüssigkeitsdichte Verbindung zwischen zwei Flüssigkeitsleitungen einer Hochdruckreinigungseinrichtung herstellen und auch wieder lösen.

Das Klemmelement weist bei einer vorteilhaften Ausgestaltung eine koaxial zur Gewindelängsachse ausgerichtete Ringfläche auf, die mit einer komplementär ausgestalteten Ringfläche des Klemmelements der zweiten Kupplungsanordnung verklemmbar ist. Die beiden Ringflächen können in axialer Richtung bezogen auf die Gewindelängsachse ineinander geführt werden, so dass eine der beiden Ringflächen die andere Ringfläche in Umfangsrichtung umgibt und die beiden Ringflächen miteinander verklemmen.

Die Ringfläche der erfindungsgemäßen Kupplungsanordnung ist günstigerweise konisch ausgestaltet. Die Ringfläche bildet somit einen kegelstumpfförmigen Abschnitt des Verbindungsteils aus, der mit einem komplementär ausgestalteten kegelstumpfförmigen Abschnitt der zweiten Kupplungsanordnung klemmend zusammenwirkt.

Der Konuswinkel der konischen Ringfläche beträgt bevorzugt etwa 2° bis circa 11°, insbesondere 5° bis 6°. Als Konuswinkel wird hierbei der Öffnungswinkel der konischen Ringfläche bezeichnet, also der Öffnungswinkel des kegelstumpfförmigen Abschnitts des Verbindungsteils. Es hat sich gezeigt, dass durch einen verhältnismäßig kleinen Konuswinkel die Handhabung der Kupplungsanordnung erleichtert wird beim Herstellen einer flüssigkeitsdichten Verbindung mit einer komplementär ausgestalteten zweiten Kupplungsanordnung.

Von besonderem Vorteil ist es, wenn der Konuswinkel der konischen Ringfläche das 0,8-fache bis 1,2-fache des Steigungswinkels des Gewindes beträgt.

Insbesondere kann vorgesehen sein, dass der Konuswinkel der konischen Ringfläche im Rahmen der Fertigungstoleranzen identisch ist mit dem Steigungswinkel des mehrgängigen Gewindes.

Der Steigungswinkel des Gewindes beträgt vorzugsweise 5° bis 6°.

Es kann vorgesehen sein, dass der Steigungswinkel des mehrgängigen Gewindes 5,2° bis 5,8° beträgt und dass der Konuswinkel der konischen Ringfläche 5,2° bis 6,1° beträgt.

Die Gangzahl des mehrgängigen Gewindes der erfindungsgemäßen Kupplungsanordnung beträgt bevorzugt 2 bis 6. Besonders vorteilhaft ist ein 4-gängiges Gewinde.

Das Gewinde ist günstigerweise in Form eines Trapezgewindes ausgestaltet.

Der Schmutzaufnahmeraum schließt sich in axialer Richtung bevorzugt unmittelbar an das Gewinde an.

Das Klemmelement schließt sich in axialer Richtung bevorzugt unmittelbar an den Schmutzaufnahmeraum an.

In axialer Richtung erstreckt sich das Klemmelement günstigerweise über eine Länge, die praktisch identisch ist mit der Länge des mehrgängigen Gewindes.

Das Gewinde und das Klemmelement sind bevorzugt einstückig miteinander verbunden. Sie bilden somit gemeinsam ein einteiliges Bauteil der Kupplungsanordnung aus.

Bei einer bevorzugten Ausführungsform ist das Verbindungsteil der Kupplungsanordnung als Überwurfring ausgestaltet, der am Steckteil frei drehbar und in axialer Richtung allenfalls beschränkt verschiebbar gelagert ist, wobei das mehrgängige Gewinde als Innengewinde des Überwurfrings ausgestaltet ist und das Klemmelement an der Innenseite des Überwurfrings angeordnet ist. Zur Herstellung einer fluiddichten Verbindung kann das Steckteil unter Zwischenlage eines Dichtrings mit einem komplementär ausgestalteten Steckteil einer zweiten Kupplungsanordnung steckbar verbunden werden, und mit Hilfe des Überwurfrings kann eine Schraubverbindung zwischen der Kupplungsanordnung und der zweiten Kupplungsanordnung hergestellt werden.

Der Überwurfring weist ein mehrgängiges Innengewinde auf und ist am Steckteil frei drehbar und in axialer Richtung bevorzugt praktisch unverschiebbar gelagert. Das Innengewinde ist zwischen der Lagerstelle des Überwurfrings und der freien Stirnfläche des Überwurfrings angeordnet und das Klemmelement ist auf der der Lagerstelle des Überwurfrings abgewandten Seite des Innengewindes positioniert. Günstigerweise ist zwischen dem Innengewinde und dem Klemmelement der voranstehend erläuterte Schmutzaufnahmeraum angeordnet.

Bei Einsatz eines Überwurfrings ist das Klemmelement günstigerweise als Innenkonus des Überwurfrings ausgestaltet, dessen Innendurchmesser sich mit zunehmendem Abstand zur freien Stirnfläche des Überwurfrings verringert.

Bevorzugt erstreckt sich der Innenkonus bis zur freien Stirnfläche des Überwurfrings. Der Innenkonus schließt sich somit unmittelbar an die freie Stirnfläche des Überwurfrings an und im Abstand zur freien Stirnfläche ist an der Innenseite des Überwurfrings das mehrgängige Gewinde positioniert.

Alternativ zur Ausgestaltung des Verbindungsteils in Form eines Überwurfrings kann beispielsweise auch vorgesehen sein, dass das Verbindungsteil starr, insbesondere einstückig mit dem Steckteil verbunden ist. Bei einer einstückigen Ausführungsform können das Steckteil und das Verbindungsteil gemeinsam ein einteiliges Bauteil ausbilden. Das Steckteil kann beispielsweise in Form eines nippel- oder hülsenförmigen Ansatzes ausgestaltet sein, an den sich das Verbindungsteil in axialer Richtung einstückig anschließt.

Bei einer starren, vorzugsweise einstückigen Verbindung des Verbindungsteils mit dem Steckteil ist es günstig, wenn das Gewinde als Außengewinde ausgestaltet ist und das Klemmelement an der Außenseite des Verbindungsteils angeordnet ist.

Das Klemmelement der Kupplungsanordnung ist bei einer starr, insbesondere einstückig mit dem Steckteil verbundenen Ausgestaltung des Verbindungsteils günstigerweise als Außenkonus ausgebildet, dessen Außendurchmesser sich mit zunehmendem axialen Abstand zum Gewinde erweitert.

Es kann auch vorgesehen sein, dass bei einer starr mit dem Steckteil verbundenen Ausgestaltung des Verbindungsteils das Gewinde als Innengewinde ausgebildet und das Klemmelement an der Innenseite des Verbindungsteils angeordnet ist. Beispielsweise kann das Steckteil in Form einer Hülse ausgebildet sein und das Verbindungsteil kann als der Hülse vorgelagerter Verbindungsring ausgebildet sein, der konzentrisch zur Hülse ausgerichtet ist und innenseitig das Innengewinde und das Klemmelement trägt. Beim Herstellen einer Steckverbindung zwischen der Hülse und einem komplementär ausgestalteten Nippel kann der Nippel mit einem Außengewinde in den Verbindungsring eingeschraubt werden.

Bei einer vorteilhaften Ausführungsform ist das Klemmelement starr mit dem Steckteil verbunden und bildet einen Innenkonus aus, dessen Innendurchmesser sich mit zunehmendem Abstand zur freien Stirnseite des Verbindungsteils verringert.

Günstig ist es, wenn das Steckteil den Dichtring trägt und in axialer Richtung zwischen dem Dichtring und dem Gewinde eine Ringnut aufweist, in der ein O-Ring angeordnet ist. Mit Hilfe des O-Rings kann verhindert werden, dass Schmutzpartikel zum Dichtring gelangen können, wenn das Steckteil mit dem komplementär ausgestalteten Steckteil der zweiten Kupplungsanordnung zusammengesteckt wird.

Wie bereits erwähnt, kann das Steckteil der erfindungsgemäßen Kupplungsanordnung beispielsweise als Nippel ausgestaltet sein. Ein komplementär ausgestaltetes Steckteil einer zweiten Kupplungsanordnung kann in einem solchen Fall beispielsweise in Form einer Hülse ausgebildet sein, in die der Nippel einführbar ist unter Zwischenlage eines Dichtrings. Der Dichtring kann beispielsweise in einer den Nippel in Umfangsrichtung umgebenden Ringnut angeordnet sein oder auch in einer Ringnut, die in die Wand einer Innenbohrung der Hülse eingearbeitet ist.

Bei einer Ausgestaltung des Steckteils in Form eines Nippels ist es von Vorteil, wenn der Nippel einen ersten Längsabschnitt aufweist, in dem der Dichtring angeordnet ist und der sich von der freien Endfläche des Nippels bis zu einer Erweiterung des Nippels erstreckt, an die sich ein zweiter Längsabschnitt des Nippels anschließt, dessen Durchmesser größer ist als der Durchmesser des ersten Längsabschnitts. Der Nippel ist bei einer derartigen Ausgestaltung stufig ausgebildet, wobei er mit seinem ersten Längsabschnitt unter Zwischenlage des Dichtrings abdichtend an eine Dichtfläche einer Hülse der zweiten Kupplungsanordnung anlegbar ist. Mit seinem zweiten Längsabschnitt kann der Nippel an einer der Dichtfläche in Fügerichtung vorgelagerten Führungsfläche der Hülse anliegen, die das Einführen des Nippels in die Hülse erleichtert. Wird die flüssigkeitsdichte Verbindung zwischen der Hülse und dem Nippel gelöst, so kann der erste Längsabschnitt des Nippels zusammen mit dem daran gehaltenen Dichtring in den Bereich der Führungsfläche gelangen, noch bevor die Schraubverbindung zwischen den beiden Kupplungsanordnungen vollständig gelöst ist. Nimmt der Dichtring eine Position im Bereich der Führungsfläche der Hülse ein, so ist die Dichtwirkung nicht länger gewährleistet und Flüssigkeit kann über den Bereich zwischen dem ersten Längsabschnitt des Nippels und der Führungsfläche der Hülse nach außen gelangen. Das Austreten von Flüssigkeit kann vom Benutzer erkannt werden, noch bevor er die Schraubverbindung vollständig gelöst hat, und durch erneutes Verschrauben der beiden Kupplungsanordnungen kann der Nippel wieder so weit in die Hülse eingeführt werden, dass der Dichtring wieder flüssigkeitsdicht an der zugeordneten Dichtfläche der Hülse anliegt und somit die fluiddichte Verbindung wieder hergestellt ist. Ein unbeabsichtigtes Trennen der beiden Kupplungsanordnungen in einem Zustand, bei dem die Kupplungsanordnungen noch von unter Druck stehender Flüssigkeit durchströmt werden, kann somit verhindert werden.

Das Steckteil der erfindungsgemäßen Kupplungsanordnung kann beispielsweise auch als Hülse ausgestaltet sein, die eine Innenbohrung aufweist. Ein komplementär ausgestaltetes Steckteil einer zweiten Kupplungsanordnung kann bei einer derartigen Ausgestaltung beispielsweise in Form eines Nippels ausgebildet sein, der in die Innenbohrung der Hülse einführbar ist.

Die Hülse kann auf ihrer Innenseite eine in die Wandung der Innenbohrung eingearbeitete Ringnut aufweisen, in der der Dichtring positioniert ist. Alternativ kann vorgesehen sein, dass der in die Innenbohrung der Hülse einführbare Nippel außenseitig eine Ringnut trägt, in die der Dichtring angeordnet ist.

Wie bereits erwähnt, kann das Verbindungsteil der erfindungsgemäßen Kupplungsanordnung als Überwurfring ausgebildet sein. Bei der Ausgestaltung des Steckteils als Hülse kann der Überwurfring die Hülse in Umfangsrichtung umgeben und drehfest und axial allenfalls beschränkt verschiebbar an der Hülse gelagert sein. Zur Lagerung des Überwurfrings an der Hülse kommt bei einer vorteilhaften Ausgestaltung ein Sicherungsring zum Einsatz.

Bei einer vorteilhaften Ausführungsform ist das Verbindungsteil starr, insbesondere einstückig mit der Hülse verbunden.

Das Verbindungsteil kann die Hülse in Umfangsrichtung umgeben.

Die Hülse und das Verbindungsteil können gemeinsam ein einteiliges Bauteil ausbilden, wobei die Hülse die Innenseite des Bauteils und das Verbindungsteil die Außenseite des Bauteils ausbildet. Auf seiner Außenseite kann das Bauteil ein Außengewinde aufweisen sowie ein vorzugsweise konusförmig ausgebildetes Klemmelement. Auf seiner Innenseite kann das Bauteil eine Dichtfläche ausbilden, an der ein Dichtring abdichtend anlegbar ist.

Alternativ kann vorgesehen sein, dass das Verbindungsteil starr, insbesondere einstückig mit der Hülse verbunden und koaxial zur Hülse ausgerichtet ist.

Das Verbindungsteil kann einen Verbindungsring ausbilden, mit einem Innengewinde, in das ein komplementär ausgestalteter Nippel mit einem Außengewinde eingeschraubt werden kann. Der Verbindungsring und die Hülse können gemeinsam ein einteiliges Bauteil ausbilden.

Das vorzugsweise konusförmig ausgebildete Klemmelement kann an der Innenseite des Verbindungsrings angeordnet sein.

Günstig ist es, wenn die Innenbohrung der Hülse eine Dichtfläche ausbildet, an die ein Dichtring abdichtend anlegbar ist und an die sich in axialer Richtung eine Führungsfläche anschließt, deren Innendurchmesser größer ist als der Innendurchmesser der Dichtfläche. Die Führungsfläche kann sich bis zu einer freien Stirnseite der Hülse erstrecken, wobei sie sich in einem der Stirnfläche unmittelbar benachbarten Endbereich günstigerweise kontinuierlich erweitert. Dies erleichtert das Einsetzen eines Nippels in die Hülse.

Die Erfindung betrifft auch eine Schraubkupplung für Flüssigkeitsleitungen einer Hochdruckreinigungseinrichtung, wobei mittels der Schraubkupplung innerhalb kurzer Zeit eine flüssigkeitsdichte Verbindung zwischen zwei Flüssigkeitsleitungen der Hochdruckreinigungseinrichtung erzielbar und sichergestellt ist, dass sich die Verbindung nicht unbeabsichtigt löst. Die erfindungsgemäße Schraubkupplung weist hierzu eine erste Kupplungsanordnung der erfindungsgemäßen Art auf, bei der das Steckteil als Nippel ausgebildet ist, und eine zweite Kupplungsanordnung der erfindungsgemäßen Art, bei der das Steckteil als Hülse ausgebildet ist, wobei der Nippel der ersten Kupplungsanordnung unter Zwischenlage eines Dichtrings in die Hülse der zweiten Kupplungsanordnung einführbar ist, wobei das mehrgängige Gewinde der zweiten Kupplungsanordnung komplementär zum mehrgängigen Gewinde der ersten Kupplungsanordnung und das Klemmelement der zweiten Kupplungsanordnung komplementär zum Klemmelement der ersten Kupplungsanordnung ausgestaltet ist und wobei die beiden Klemmelemente durch axiales Ineinanderführen lösbar miteinander verklemmbar sind. Mittels der Gewinde sind die beiden Kupplungsanordnungen miteinander verschraubbar, wobei die Gewinde komplementär zueinander und jeweils mehrgängig, vorzugsweise viergängig, ausgestaltet sind. Der Nippel der ersten Kupplungsanordnung kann vorzugsweise durch eine einzige Umdrehung der beiden Gewinde relativ zueinander in axialer Richtung so weit in die komplementär ausgestaltete Hülse der zweiten Kupplungsanordnung eingeführt werden, dass der Nippel und die Hülse gemeinsam mit dem zwischen dem Nippel und der Hülse angeordneten Dichtring eine flüssigkeitsdichte Verbindung sicherstellen. Haben die beiden Gewinde ihre Endlage erreicht, so verklemmen die in axialer Richtung ineinander geführten Klemmelemente der beiden Kupplungsanordnungen. Die Klemmelemente definieren somit die Endposition der beiden Gewinde beim Verschrauben der Kupplungsanordnungen und stellen sicher, dass sich die Kupplungsanordnungen nicht unbeabsichtigt voneinander lösen können, selbst wenn die miteinander zusammenwirkenden Gewinde nicht selbsthemmend sind.

Die beiden Kupplungsanordnungen der erfindungsgemäßen Schraubkupplung sind günstigerweise werkzeuglos miteinander verschraubbar. Dies erleichtert die Handhabung der Schraubkupplung.

Bei der erfindungsgemäßen Schraubkupplung weisen die beiden Kupplungsanordnungen komplementär zueinander ausgestaltete Steckteile auf, die unter Zwischenlage eines Dichtrings ineinandergesteckt werden können, und zusätzlich weisen die Kupplungsanordnungen Verbindungsteile auf, die jeweils ein mehrgängiges Gewinde und ein Klemmelement umfassen. Die Klemmelemente und die Gewinde sind komplementär zueinander ausgebildet.

Zwischen den mehrgängigen Gewinden und den Klemmelementen der Kupplungsanordnungen ist jeweils ein Schmutzaufnahmeraum positioniert, wie dies voranstehend bereits im Einzelnen erläutert wurde.

Es kann vorgesehen sein, dass das mehrgängige Gewinde und das Klemmelement der zweiten Kupplungsanordnung auf der Außenseite der Hülse oder axial versetzt zur Hülse angeordnet sind.

Innenseitig bildet die Hülse günstigerweise eine Dichtfläche aus, an die ein am Nippel der ersten Kupplungsanordnung gehaltener Dichtring abdichtend anlegbar ist.

Das Klemmelement der zweiten Kupplungsanordnung ist günstigerweise als koaxial zur Gewindelängsachse ausgerichtete Ringfläche ausgebildet, insbesondere als konische Ringfläche. Die Ringfläche kann einen Außenkonus ausbilden, der an der Außenseite der Hülse angeordnet ist.

Wie bereits erwähnt, kann auch vorgesehen sein, dass die zweite Kupplungsanordnung, deren Steckteil als Hülse ausgebildet ist, einen Überwurfring aufweist, der an der Hülse frei drehbar und in axialer Richtung allenfalls beschränkt verschiebbar, vorzugsweise im Wesentlichen unverschiebbar gelagert ist, wobei das Gewinde der zweiten Kupplungsanordnung als Innengewinde des Überwurfrings ausgestaltet ist und das Klemmelement der zweiten Kupplungsanordnung an der Innenseite des Überwurfrings positioniert ist.

Das Klemmelement kann beispielsweise in Form eines Innenkonus des Überwurfrings ausgestaltet sein.

Die erfindungsgemäße Schraubkupplung kommt vorzugsweise zum Herstellen einer fluiddichten und werkzeuglos lösbaren Verbindung zwischen dem Druckauslass eines Hochdruckreinigungsgeräts und einem Druckschlauch und/oder zwischen einem Druckschlauch und einer Spritzpistole und/oder zwischen einer Spritzpistole und einer Sprühlanze und/oder zwischen einer Sprühlanze und einer Sprühdüse zum Einsatz.

Die nachfolgende Beschreibung vorteilhafter Ausführungsformen der Erfindung dient im Zusammenhang mit der Zeichnung der näheren Erläuterung. Es zeigen:
- Figur 1:: eine schematische Längsschnittansicht einer ersten vorteilhaften Ausführungsform einer Schraubkupplung mit zwei Kupplungsanordnungen gemäß der Erfindung;
- Figur 2:: eine schematische Längsschnittansicht einer zweiten vorteilhaften Ausführungsform einer Schraubkupplung mit zwei Kupplungsanordnungen gemäß der Erfindung; und
- Figur 3:: eine schematische Längsschnittansicht einer dritten vorteilhaften Ausführungsform einer Schraubkupplung mit zwei Kupplungsanordnungen gemäß der Erfindung.

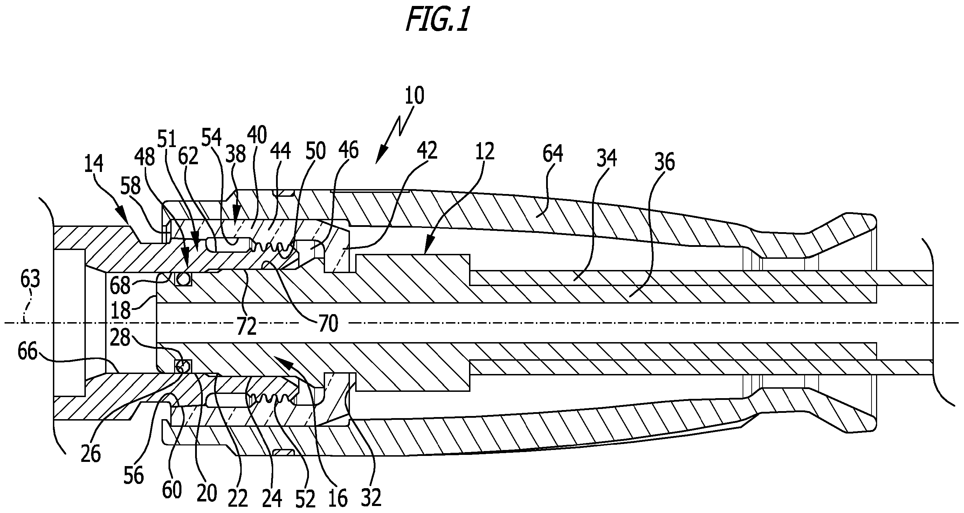

In Figur 1 ist schematisch eine erste vorteilhafte Ausführungsform einer Schraubkupplung dargestellt, die insgesamt mit dem Bezugszeichen 10 belegt ist. Die Schraubkupplung 10 umfasst eine erste Kupplungsanordnung 12 und eine komplementär ausgestaltete zweite Kupplungsanordnung 14, die erfindungsgemäß ausgestaltet und auf einfache Weise ohne Werkzeug flüssigkeitsdicht miteinander verschraubt und bei Bedarf ohne Werkzeug auch wieder voneinander getrennt werden können.

Die erste Kupplungsanordnung 12 weist ein Steckteil in Form eines Nippels 16 auf mit einer freien Stirnfläche 18, an die sich ein erster Längsabschnitt 20 anschließt, der über eine Erweiterung 22 in einen zweiten Längsabschnitt 24 übergeht. Der Durchmesser des zweiten Längsabschnitts 24 ist größer als der Durchmesser des ersten Längsabschnitts 20. Im Bereich des ersten Längsabschnitts 20 weist der Nippel 16 eine Ringnut 26 auf, in der ein Dichtring 28 angeordnet ist.

Im Abstand zum zweiten Längsabschnitt 24 weist der Nippel 16 eine Umfangsnut 32 auf. Der Nippel 16 ist in der dargestellten Ausführungsform an einen Druckschlauch 34 angeschlossen. Zu diesem Zwecke bildet der Nippel 16 in seinem dem Dichtring 28 abgewandten Endbereich einen hohlen Anschlusszapfen 36, auf den der Druckschlauch 34 aufgepresst ist.

In die Umfangsnut 32 taucht ein Verbindungsteil 38 der ersten Kupplungsanordnung 12 ein. Das Verbindungsteil 38 ist im dargestellten Ausführungsbeispiel als Überwurfring 40 ausgebildet, der in der Umfangsnut 32 frei drehbar und in axialer Richtung praktisch unverschiebbar gelagert ist und sich in axialer Richtung über den Dichtring 28 hinaus erstreckt. Mit einer Rückwand 42 taucht der Überwurfring 40 in die Umfangsnut 32 ein. Die Rückwand 42 ist einstückig mit einer Umfangswand 44 des Überwurfrings 40 verbunden. Die Umfangswand 44 und der Nippel 16 definieren zwischen sich einen ringförmigen Zwischenraum 46, in den die zweite Kupplungsanordnung 14 mit einem als Hülse 48 ausgestalteten Steckteil eintaucht.

Der Überwurfring 40 weist innenseitig ein mehrgängiges Innengewinde 50 auf, das auf ein komplementär ausgestaltetes mehrgängiges Außengewinde 52 aufgeschraubt werden kann. Das Außengewinde 52 sowie ein nachfolgend näher erläuterter Außenkonus 60 werden von einem Verbindungsteil 51 der zweiten Kupplungsanordnung 14 gebildet, das die Hülse in Umfangsrichtung umgibt und starr und einstückig mit der Hülse 48 verbunden ist. An das Innengewinde 50 schließt sich in axialer Richtung ein ringförmiger Schmutzaufnahmeraum 54 des Überwurfrings 40 an, an den sich ein ringförmiges Klemmelement in Form eines Innenkonus 56 anschließt. Der Durchmesser des Innenkonus 56 erweitert sich mit zunehmendem Abstand vom Innengewinde 50. Der Innenkonus erstreckt sich bis zu einer der Rückwand 42 abgewandten freien Stirnfläche 58 des Überwurfrings 40.

Das die Hülse 48 umgebende Verbindungsteil 51 bildet mit dem in Höhe des Innenkonus 56 des Überwurfrings 40 angeordneten Außenkonus 60 ein ringförmiges Klemmelement aus, das komplementär zum Innenkonus 56 ausgestaltet ist. Zwischen dem Außenkonus 60 und dem Außengewinde 52 weist das Verbindungsteil 51 einen Schmutzaufnahmeraum 62 auf, der vom Schmutzaufnahmeraum 54 des Überwurfrings 40 umgeben ist.

Eine Längsachse 63 der Schraubkupplung 10 bildet eine Gewindelängsachse aus sowohl für das Innengewinde 50 als auch für das Außengewinde 52. Der Innenkonus 56 ist bezogen auf die Gewindelängsachse fluchtend zum Innengewinde 50 angeordnet und der Außenkonus 60 ist bezogen auf die Gewindelängsachse fluchtend zum Außengewinde 52 angeordnet.

Die Hülse 48 kann beispielsweise am Druckauslass eines Hochdruckreinigungsgeräts angeordnet sein oder auch am Einlass oder Auslass einer Spritzpistole oder beispielsweise auch am Einlass einer Sprühdüse, über die unter Druck gesetzte Reinigungsflüssigkeit auf einen zu reinigenden Gegenstand gerichtet werden kann. Der Nippel 16 kann, wie voranstehend bereits erläutert, an einem Druckschlauch 34 angeordnet sein, oder beispielsweise auch an einer Sprühlanze.

In dem in Figur 1 dargestellten Ausführungsbeispiel ist der Überwurfring 40 von einer Griffhülse 64 umgeben, die auf dem Überwurfring 40 aufgepresst und drehfest mit diesem verbunden ist.

Die Hülse 48 weist eine zylindrische Innenbohrung 66 auf mit einer Dichtfläche 68, an die der Dichtring 28 abdichtend anlegbar ist, und mit einer sich in Richtung auf das freie Ende 70 der Hülse 48 an die Dichtfläche 68 anschließende Führungsfläche 72, deren Innendurchmesser größer ist als der Innendurchmesser der Dichtfläche 68.

Zum Herstellen einer flüssigkeitsdichten und lösbaren Verbindung zwischen der ersten Kupplungsanordnung 12 und der zweiten Kupplungsanordnung 14 kann der Nippel 16 in die Hülse 48 eingeführt werden, wobei zuerst der erste Längsabschnitt 20 des Nippels 16 in die Führungsfläche 72 der Hülse 48 eintaucht und anschließend die Hülse in den ringförmigen Zwischenraum 46 zwischen der Umfangswand 44 des Überwurfrings 40 und dem Nippel 16 eintaucht. Der Überwurfring 40 kann so weit in axialer Richtung über die Hülse 48 geführt werden, bis das Außengewinde 52 der Hülse 48 mit dem Innengewinde 50 des Überwurfrings 40 in Eingriff gelangen kann. Der kleinste Durchmesser des Innenkonus 56 ist zu diesem Zweck größer gewählt als der Außendurchmesser des Außengewindes 52, so dass der Innenkonus 56 über das Außengewinde 52 geschoben werden kann. Das Innengewinde 50 kann anschließend mit dem Außengewinde 52 verschraubt werden. Die beiden Gewinde sind jeweils 4-gängig ausgebildet und weisen eine Steigung von 6 mm auf, so dass durch eine einzige Umdrehung eine axiale Bewegung von 6 mm realisiert werden kann. Der Innenkonus 56 gleitet hierbei am Außenkonus 60 entlang und wird in einer Endstellung, in der das Innengewinde 50 nach einer Umdrehung vollständig auf das Außengewinde 52 aufgeschraubt ist und der Dichtring 28 flüssigkeitsdicht an der Dichtfläche 68 anliegt, mit dem Außenkonus 60 verklemmt. Dadurch ist sichergestellt, dass die Schraubverbindung zwischen der ersten Kupplungsanordnung 12 und der zweiten Kupplungsanordnung 14 sich nicht unbeabsichtigt lösen kann. Schmutzpartikel, die sich vor dem Aufschrauben des Innengewindes 50 auf das Außengewinde 52 im Bereich des Außengewindes 52 befinden, werden beim Aufschrauben in die Schmutzaufnahmeräume 54 und 62 verschoben, ohne dass sie den Innenkonus 56 oder den Außenkonus 60 verschmutzen.

Wird die Schraubverbindung zwischen der ersten Kupplungsanordnung 12 und der zweiten Kupplungsanordnung 14 wieder gelöst, so gelangt der Dichtring 28 in den Bereich der Führungsfläche 72 noch bevor das Innengewinde 50 vom Außengewinde 52 vollständig getrennt ist. Sollte die Schraubkupplung 10 beim Lösen der Verbindung zwischen der ersten Kupplungsanordnung 12 und der zweiten Kupplungsanordnung 14 noch von unter Druck stehender Flüssigkeit durchströmt werden, so wird die Verbindung undicht, sobald der Dichtring 28 die Führungsfläche 72 erreicht, und unter Druck stehende Flüssigkeit kann über die Führungsfläche 72 nach außen gelangen, ohne dass die Schraubverbindung bereits vollständig gelöst ist. Die austretende Flüssigkeit kann dem Benutzer als Signal dienen, dass die Schraubkupplung 10 noch von Flüssigkeit durchströmt wird. Der Benutzer kann dann umgehend die Schraubverbindung wieder vollständig herstellen, indem er das Innengewinde 50 wieder vollständig auf das Außengewinde 52 aufschraubt.

Das Herstellen und Lösen der flüssigkeitsdichten Schraubverbindung zwischen der ersten Kupplungsanordnung 12 und der zweiten Kupplungsanordnung 14 gestaltet sich für den Benutzer durch die Bereitstellung der mehrgängigen Gewinde 50 und 52 sehr einfach, und durch die Bereitstellung der in axialer Richtung ineinanderführbaren und miteinander verklemmbaren Innen- und Außenkonusse 56, 60 kann einem unbeabsichtigten Lösen der Schraubverbindung zuverlässig entgegengewirkt werden, ohne dass die Gewinde 50 und 52 selbsthemmend ausgebildet sein müssen.

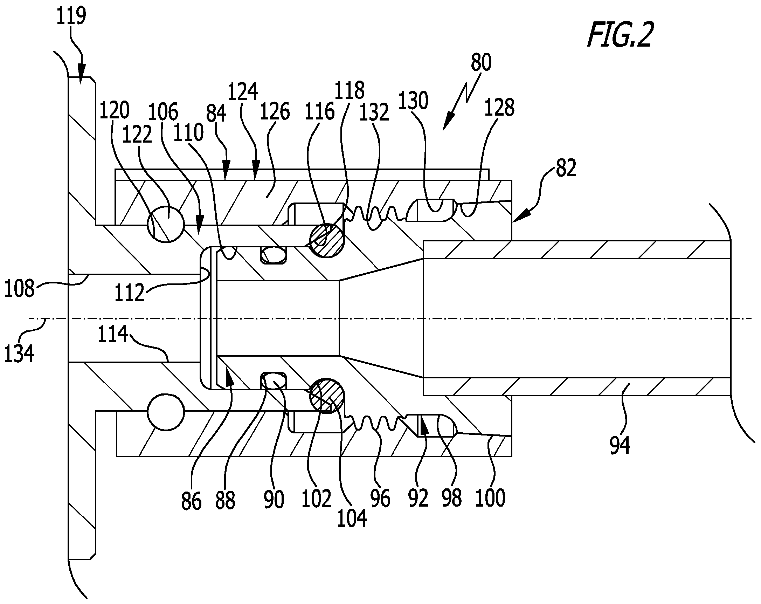

In Figur 2 ist schematisch eine zweite vorteilhafte Ausführungsform einer erfindungsgemäßen Schraubkupplung dargestellt, die insgesamt mit dem Bezugszeichen 80 belegt ist. Die Schraubkupplung 80 umfasst eine erste Kupplungsanordnung 82 und eine zweite Kupplungsanordnung 84, die erfindungsgemäß ausgestaltet und ohne Werkzeug flüssigkeitsdicht miteinander verschraubt und bei Bedarf ohne Werkzeug voneinander getrennt werden können.

Die erste Kupplungsanordnung 82 umfasst ein Steckteil in Form eines Nippels 86 mit einer Ringnut 88, in der ein Dichtring 90 angeordnet ist. Im Unterschied zu der voranstehend unter Bezugnahme auf Figur 1 erläuterten ersten Kupplungsanordnung 12 weist die erste Kupplungsanordnung 82 ein einstückig mit dem Nippel 86 verbundenes Verbindungsteil 92 auf. Im dargestellten Ausführungsbeispiel ist das Verbindungsteil 92 auf ein Strahlrohr 94 einer Hochdruckreinigungseinrichtung aufgepresst. Das Verbindungsteil 92 trägt außenseitig ein mehrgängiges Außengewinde 96, an das sich in axialer Richtung, dem Nippel 86 abgewandt, ein Schmutzaufnahmeraum 98 anschließt, an den sich wiederum ein Klemmelement der ersten Kupplungsanordnung 82 in Form eines Außenkonus 100 anschließt.

Im Übergangsbereich zwischen dem Nippel 86 und dem Außengewinde 96 weist die erste Kupplungsanordnung 82 eine weitere Ringnut 102 auf, in der ein O-Ring 104 angeordnet ist.

Die zweite Kupplungsanordnung 84 weist ein Steckteil in Form einer Hülse 106 auf mit einer stufigen Innenbohrung 108. Die Innenbohrung 108 weist eine zylindrische Dichtfläche 110 auf, an die sich über eine radial nach innen gerichtete Stufe 112 ein Ausgangsabschnitt 114 anschließt und die sich über einen konischen Eingangsabschnitt 116 bis zum freien Ende 118 der Hülse 106 erstreckt. Im dargestellten Ausführungsbeispiel ist die Hülse 106 einstückig mit einem in der Zeichnung nur ausschnittsweise dargestellten Gehäuse 119 einer an sich bekannten und deshalb zur Erzielung einer besseren Übersicht in der Zeichnung nicht dargestellten Sprühdüse verbunden.

In Höhe des Ausgangsabschnitts 114 weist die Hülse 106 außenseitig eine Ringnut 120 auf, in der ein Sicherungsring 122 gehalten ist. Mittels des Sicherungsrings 122 ist an der Hülse 106 ein Verbindungsteil 124 der zweiten Kupplungsanordnung 84 frei drehbar und in axialer Richtung unverschiebbar gelagert. Das Verbindungsteil 124 ist im dargestellten Ausführungsbeispiel in Form eines Überwurfrings 126 ausgestaltet, der die Hülse 106 in Umfangsrichtung umgibt und sich in axialer Richtung über das freie Ende 118 der Hülse 106 hinaus bis zum Außenkonus 100 der ersten Kupplungsanordnung 82 erstreckt. In Höhe des Außenkonus 100 trägt der Überwurfring 126 auf seiner Innenseite einen komplementär zum Außenkonus 100 ausgestalteten Innenkonus 128, an den sich in axialer Richtung ein Schmutzaufnahmeraum 130 des Überwurfrings 126 anschließt. An den Schmutzaufnahmeraum 130 schließt sich ein mehrgängiges Innengewinde 132 des Überwurfrings 126 an, das komplementär zum Außengewinde 96 der ersten Kupplungsanordnung 82 ausgestaltet ist.

Eine Längsachse 134 der Schraubkupplung 80 bildet eine Gewindelängsachse sowohl des Außengewindes 96 als auch des Innengewindes 132 aus. Der Außenkonus 100 ist bezogen auf die Gewindelängsachse fluchtend zum Außengewinde 96 angeordnet, und der Innenkonus 128 ist bezogen auf die Gewindelängsachse fluchtend zum Innengewinde 132 angeordnet.

Zum Herstellen einer flüssigkeitsdichten Verbindung zwischen der ersten Kupplungsanordnung 82 und der zweiten Kupplungsanordnung 84 kann der Nippel 86 in die Hülse 106 eingesetzt werden, noch bevor das Außengewinde 96 mit dem Innengewinde 132 in Eingriff gelangt. Anschließend kann das Innengewinde 132 mit dem Außengewinde 96 verschraubt werden, wobei durch eine einzige Umdrehung eine axiale Bewegung von etwa 6 mm erreicht wird, so dass der Dichtring 90 an der Dichtfläche 110 dichtend zur Anlage gelangt und der Innenkonus 128 mit dem Außenkonus 110 verklemmt wird. Schmutzpartikel, die sich vor dem Aufschrauben im Bereich des Außengewindes befinden, werden beim Aufschrauben in die Schmutzaufnahmeräume 98 und 130 überführt und können somit den Innenkonus 128 und den Außenkonus 110 nicht verschmutzen.

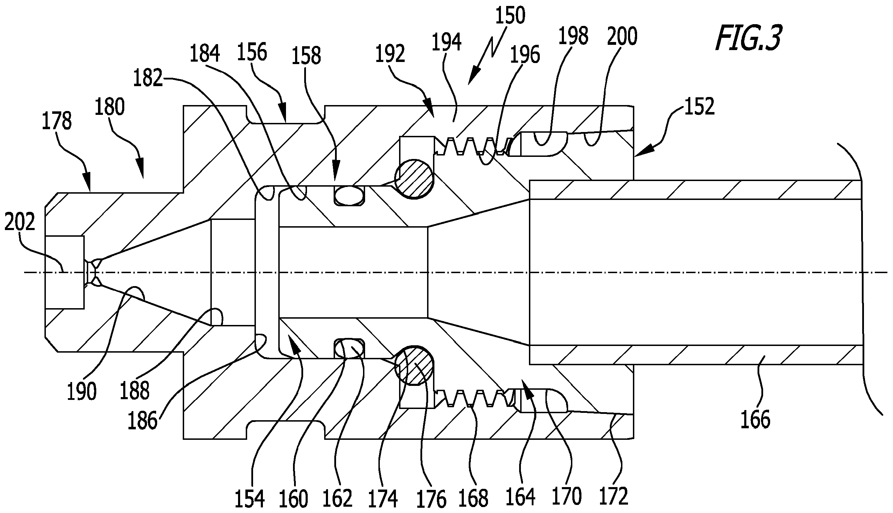

In Figur 3 ist schematisch eine dritte vorteilhafte Ausführungsform einer erfindungsgemäßen Schraubkupplung dargestellt, die insgesamt mit dem Bezugszeichen 150 belegt ist. Die Schraubkupplung 150 umfasst eine erste Kupplungsanordnung 152 mit einem Steckteil in Form eines Nippels 154 und eine zweite Kupplungsanordnung 156 mit einem Steckteil in Form einer Hülse 158. Die erste Kupplungsanordnung 152 und die zweite Kupplungsanordnung 156 sind jeweils erfindungsgemäß ausgestaltet und ohne Werkzeug flüssigkeitsdicht miteinander verschraubbar und bei Bedarf auch ohne Werkzeug voneinander trennbar.

Der Nippel 154 weist außenseitig eine Ringnut 160 auf, in der ein Dichtring 162 angeordnet ist, und in Übereinstimmung mit der voranstehend unter Bezugnahme auf Figur 2 erläuterten ersten Kupplungsanordnung 82 weist auch die erste Kupplungsanordnung 152 ein starr, im dargestellten Ausführungsbeispiel einstückig mit dem Nippel 154 verbundenes Verbindungsteil 164 auf, das im dargestellten Ausführungsbeispiel auf ein Strahlrohr 166 aufgepresst ist. Außenseitig trägt das Verbindungsteil 164 ein mehrgängiges Außengewinde 168, an das sich in axialer Richtung, dem Nippel 154 abgewandt, ein Schmutzaufnahmeraum 170 anschließt, an den sich wiederum ein Klemmelement der ersten Kupplungsanordnung 152 in Form eines Außenkonus 172 anschließt. Im Übergangsbereich zwischen dem Nippel 154 und dem Außengewinde 168 weist die erste Kupplungsanordnung 152 eine weitere Ringnut 174 auf, in der ein O-Ring 176 angeordnet ist.

Die zweite Kupplungsanordnung 156 weist die voranstehend bereits erwähnte Hülse 158 auf, die im dargestellten Ausführungsbeispiel starr und einstückig mit einem Gehäuse 178 einer Sprühdüse 180 verbunden ist. Über die Sprühdüse 180 kann Reinigungsflüssigkeit, die von einem Hochdruckreinigungsgerät unter Druck gesetzt wurde, auf einen zu reinigenden Gegenstand gerichtet werden.

Die Hülse 158 weist eine stufige Innenbohrung 182 auf mit einer zylindrischen Dichtfläche 184, an die sich über eine radial nach innen gerichtete Stufe 186 ein Ausgangsabschnitt 188 anschließt, über den die unter Druck stehende Reinigungsflüssigkeit einer konischen Düsenbohrung 190 zugeführt werden kann.

Ein Verbindungsteil 192 in Form eines koaxial zur Hülse 158 ausgebildeten Verbindungsrings 194 schließt sich auf der dem Düsengehäuse 178 abgewandten Seite an die Hülse 158 an. Der Verbindungsring 194 und die Hülse 158 sind starr, im dargestellten Ausführungsbeispiel einstückig miteinander verbunden. Der Verbindungsring 194 bildet somit in Kombination mit der Hülse 158 und dem Düsengehäuse 178 ein einteiliges Bauteil aus.

Der Verbindungsring 194 weist in Höhe des Außengewindes 168 des Nippels 154 ein mehrgängiges Innengewinde 196 auf, an das sich, der Hülse 158 abgewandt, ein Schmutzaufnahmeraum 198 anschließt, der den Schmutzaufnahmeraum 170 der ersten Kupplungsanordnung 152 in Umfangsrichtung umgibt. An den Schmutzaufnahmeraum 198 schließt sich in axialer Richtung ein Klemmelement in Form eines Innenkonus 200 an, der komplementär zum Außenkonus 172 der ersten Kupplungsanordnung 152 ausgestaltet ist.

Eine Längsachse 202 der Schraubkupplung 150 bildet eine Gewindelängsachse sowohl des Außengewindes 168 als auch des Innengewindes 196 aus. Der Außenkonus 172 ist bezogen auf die Gewindelängsachse fluchtend zum Außengewinde 168 angeordnet, und der Innenkonus 200 ist bezogen auf die Gewindelängsachse fluchtend zum Innengewinde 196 angeordnet.

Zum Herstellen einer flüssigkeitsdichten Verbindung zwischen der ersten Kupplungsanordnung 152 und der zweiten Kupplungsanordnung 156 kann der Nippel 154 durch den Verbindungsring 194 hindurchgeführt und in die Innenbohrung 182 der Hülse 158 eingesetzt werden, noch bevor das Außengewinde 168 mit dem Innengewinde 196 in Eingriff gelangt. Anschließend kann das Außengewinde 168 mit dem Innengewinde 196 verschraubt werden. Das Außengewinde 168 und das Innengewinde 196 sind jeweils mehrgängig, vorzugsweise 4-gängig ausgestaltet und weisen bevorzugt eine Steigung von mehr als 5mm, insbesondere eine Steigung von etwa 6mm auf, so dass durch eine einzige Umdrehung des Innengewindes 196 relativ zum Außengewinde 168 eine axiale Bewegung von etwa 6mm erreicht wird und der Dichtring 162 an der Dichtfläche 184 dichtend zur Anlage gelangt und der Innenkonus 200 mit dem Außenkonus 172 verklemmt wird. Schmutzpartikel, die sich vor dem Aufschrauben der zweiten Kupplungsanordnung 156 auf die erste Kupplungsanordnung 152 im Bereich des Außengewindes 168 befinden, werden beim Aufschrauben in die Schmutzaufnahmeräume 170, 198 überführt und können somit den Innenkonus 200 und den Außenkonus 172 nicht verschmutzen. Durch die Klemmwirkung des Innenkonus 200 und des Außenkonus 172 ist sichergestellt, dass sich die beiden Kupplungsanordnungen 152, 156 nicht unbeabsichtigt voneinander lösen können.

Der Steigungswinkel der Innen- und Außengewinde 50, 52, 132, 96, 196, 168 beträgt 5° bis 6°, vorzugsweise 5,2° bis 5,8°, und der Konuswinkel der Innen- und Außenkonusse 56, 60, 128, 100, 200, 172 beträgt das 0,8-fache bis das 1,2-fache des Steigungswinkels der Innen- und Außengewinde 50, 52, 132, 96, 196, 168.

Die Innen- und Außengewinde 50, 52, 132, 96, 196, 168 und auch die Schmutzaufnahmeräume 54, 62, 98, 130, 170, 198 sind im Wesentlichen gleich lang wie die Innen- und Außenkonusse 56, 60, 128, 100, 200, 172.

## Patentansprüche

1. Kupplungsanordnung für eine Schraubkupplung (10, 80, 150) für Flüssigkeitsleitungen einer Hochdruckreinigungseinrichtung, wobei die Kupplungsanordnung (12, 14, 82, 84, 152, 156) ein Steckteil (16, 48, 86, 106, 154, 158) aufweist, das zur Herstellung einer flüssigkeitsdichten und lösbaren Verbindung unter Zwischenlage eines Dichtrings (28, 90, 162) mit einem komplementär ausgestalteten Steckteil einer zweiten Kupplungsanordnung der Schraubkupplung (10, 80, 150) steckbar verbindbar ist, sowie ein Verbindungsteil (38, 51, 92, 124, 164, 192) mit einem Gewinde (50, 52, 96, 132, 168, 196), das mit einem komplementär ausgestalteten Gewinde der zweiten Kupplungsanordnung verschraubbar ist, wobei das Gewinde (50, 52, 96, 132, 168, 196) mehrgängig ausgestaltet ist und das Verbindungsteil (38, 51, 92, 124, 164, 192) ein bezogen auf die Gewindelängsachse (63, 134, 202) fluchtend zum Gewinde (50, 52, 96, 132, 168, 196) angeordnetes Klemmelement (56, 60, 100, 128, 172, 200) aufweist, das mit einem komplementär ausgestalteten Klemmelement der zweiten Kupplungsanordnung durch axiales Ineinanderführen lösbar verklemmbar ist, wobei in axialer Richtung zwischen dem Gewinde (50, 52, 96, 132, 168, 196) und dem Klemmelement (56, 60, 100, 128, 172, 200) ein Schmutzaufnahmeraum (54, 62, 98, 130, 170, 198) angeordnet ist, der als koaxial zur Gewindelängsachse (63, 134, 202) ausgerichteter Ringraum (54, 62, 98, 130, 170, 198) ausgestaltet ist, **dadurch gekennzeichnet, dass** die Länge des Schmutzaufnahmeraums (54, 62, 98, 130, 170, 198) in axialer Richtung das 0,7-fache bis 1,3-fache der Länge des Gewindes (50, 52, 96, 132, 168, 196) beträgt.

2. Kupplungsanordnung nach Anspruch 1, **dadurch gekennzeichnet, dass** das Klemmelement (56, 60, 100, 128, 172, 200) eine koaxial zur Gewindelängsachse (63, 134, 202) ausgerichtete Ringfläche aufweist, die mit einer komplementär ausgestalteten Ringfläche des Klemmelements der zweiten Kupplungsanordnung verklemmbar ist.

3. Kupplungsanordnung nach Anspruch 2, **dadurch gekennzeichnet, dass** die Ringfläche konisch ausgebildet ist.

4. Kupplungsanordnung nach Anspruch 3, **dadurch gekennzeichnet, dass** der Konuswinkel der konischen Ringfläche zwischen 2° und 11° beträgt, insbesondere zwischen 5° und 6°.

5. Kupplungsanordnung nach Anspruch 3 oder 4, **dadurch gekennzeichnet, dass** der Konuswinkel der konischen Ringfläche das 0,8-fache bis 1,2-fache des Steigungswinkels des Gewindes (50, 52, 96, 132, 168, 196) beträgt.

6. Kupplungsanordnung nach einem der voranstehenden Ansprüche, **dadurch gekennzeichnet, dass** das Gewinde (50, 52, 96, 132, 168, 196) 4-gängig ausgestaltet ist.

7. Kupplungsanordnung nach einem der voranstehenden Ansprüche, **dadurch gekennzeichnet, dass** das Gewinde (50, 52, 96, 132, 168, 196) als Trapezgewinde ausgestaltet ist.

8. Kupplungsanordnung nach einem der voranstehenden Ansprüche, **dadurch gekennzeichnet, dass** das Gewinde (50, 52, 96, 132, 168, 196) und das Klemmelement (56, 60, 100, 128, 172, 200) einstückig miteinander verbunden sind.

9. Kupplungsanordnung nach einem der voranstehenden Ansprüche, **dadurch gekennzeichnet, dass** das Verbindungsteil (38, 124) als Überwurfring (40, 126) ausgestaltet ist, der an dem Steckteil (16, 106) frei drehbar und in axialer Richtung allenfalls begrenzt verschiebbar gelagert ist, wobei das Gewinde als Innengewinde (50, 132) des Überwurfrings (40, 126) ausgestaltet ist und das Klemmelement (56, 128) an der Innenseite des Überwurfrings (40, 126) angeordnet ist.

10. Kupplungsanordnung nach Anspruch 9, **dadurch gekennzeichnet, dass** das Klemmelement als Innenkonus (56, 128) des Überwurfrings (40, 126) ausgestaltet ist, dessen Innendurchmesser sich mit zunehmendem Abstand zur freien Stirnfläche des Überwurfrings (40, 126) verringert.

11. Kupplungsanordnung nach Anspruch 10, **dadurch gekennzeichnet, dass** sich der Innenkonus (56, 128) bis zur freien Stirnfläche des Überwurfrings (40, 126) erstreckt.

12. Kupplungsanordnung nach einem der Ansprüche 1 bis 8, **dadurch gekennzeichnet, dass** das Verbindungsteil (51, 92, 164, 192) starr mit dem Steckteil (48, 86, 154, 158) verbunden ist.

13. Kupplungsanordnung nach Anspruch 12, **dadurch gekennzeichnet, dass** das Gewinde als Außengewinde (52, 96, 168) ausgestaltet ist und das Klemmelement (60, 100, 172) an der Außenseite des Verbindungsteils (51, 92, 164) angeordnet ist.

14. Kupplungsanordnung nach Anspruch 13, **dadurch gekennzeichnet, dass** das Klemmelement als Außenkonus (60, 100, 172) ausgestaltet ist, dessen Außendurchmesser sich mit zunehmendem Abstand zum Gewinde (52, 96, 168) erweitert.

15. Kupplungsanordnung nach Anspruch 12, **dadurch gekennzeichnet, dass** das Gewinde als Innengewinde (196) ausgestaltet ist und das Klemmelement (200) an der Innenseite des Verbindungsteils (192) angeordnet ist.

16. Kupplungsanordnung nach Anspruch 15, **dadurch gekennzeichnet, dass** das Klemmelement als Innenkonus (200) ausgestaltet ist, dessen Innendurchmesser sich mit zunehmendem Abstand zur freien Stirnfläche des Verbindungsteils (192) verringert.

17. Kupplungsanordnung nach einem der voranstehenden Ansprüche, **dadurch gekennzeichnet, dass** das Steckteil (86, 154) den Dichtring (90, 162) trägt und in axialer Richtung zwischen dem Dichtring (90, 162) und dem Gewinde (96, 168) eine Ringnut (102, 174) aufweist, in der ein O-Ring (104, 176) angeordnet ist.

18. Kupplungsanordnung nach einem der voranstehenden Ansprüche, **dadurch gekennzeichnet, dass** das Steckteil als Nippel (16, 86, 154) ausgestaltet ist.

19. Kupplungsanordnung nach Anspruch 18, **dadurch gekennzeichnet, dass** der Nippel (16) einen ersten Längsabschnitt (20) aufweist, in dem der Dichtring (28) angeordnet ist und der sich von der freien Endfläche (18) des Nippels (16) bis zu einer Erweiterung (22) des Nippels (16) erstreckt, an die sich ein zweiter Längsabschnitt (24) des Nippels (16) anschließt, dessen Durchmesser größer ist als der Durchmesser des ersten Längsabschnitts (20).

20. Kupplungsanordnung nach einem der Ansprüche 1 bis 17, **dadurch gekennzeichnet, dass** das Steckteil als Hülse (48, 106, 158) ausgestaltet ist, die eine Innenbohrung (66, 108, 182) aufweist.

21. Kupplungsanordnung nach Anspruch 20, **dadurch gekennzeichnet, dass** das Verbindungsteil (51) starr mit der Hülse (48) verbunden ist und die Hülse (48) in Umfangsrichtung umgibt.

22. Kupplungsanordnung nach Anspruch 20, **dadurch gekennzeichnet, dass** das Verbindungsteil (192) starr mit der Hülse (158) verbunden und koaxial zur Hülse (158) ausgerichtet ist.

23. Kupplungsanordnung nach Anspruch 20, 21 oder 22, **dadurch gekennzeichnet, dass** die Innenbohrung (66) eine Dichtfläche (68) ausbildet, an die der Dichtring (28) abdichtend anlegbar ist und an die sich in axialer Richtung eine Führungsfläche (72) anschließt, deren Innendurchmesser größer ist als der Innendurchmesser der Dichtfläche (68).

24. Schraubkupplung für Flüssigkeitsleitungen einer Hochdruckreinigungseinrichtung mit einer ersten Kupplungsanordnung (12, 82, 152) nach Anspruch 18 oder 19 und mit einer zweiten Kupplungsanordnung (14, 84, 156) nach einem der Ansprüche 20 bis 23, wobei der Nippel (16, 86, 154) der ersten Kupplungsanordnung (12, 82, 152) in die Hülse (48, 106, 158) der zweiten Kupplungsanordnung (14, 84, 156) einführbar ist, wobei das Gewinde (52, 132, 196) der zweiten Kupplungsanordnung (14, 84, 156) komplementär zum Gewinde (50, 96, 168) der ersten Kupplungsanordnung (12, 82, 152) und das Klemmelement (60, 128, 200) der zweiten Kupplungsanordnung (14, 84, 156) komplementär zum Klemmelement (56, 100, 172) der ersten Kupplungsanordnung (12, 82, 152) ausgestaltet ist und die beiden Klemmelemente (56, 60, 100, 128, 172, 200) durch axiales Ineinanderführen lösbar miteinander verklemmbar sind.

## Claims

1. Coupling arrangement for a screw coupling (10, 80, 150) for liquid conduits of a high-pressure cleaning apparatus, wherein the coupling arrangement (12, 14, 82, 84, 152, 156) comprises a plug part (16, 48, 86, 106, 154, 158) pluggably connectable to a complementarily configured plug part of a second coupling arrangement of the screw coupling (10, 80, 150) for establishing a liquid-tight and releasable connection therewith with a sealing ring (28, 90, 162) interposed therebetween, and a connecting part (38, 51, 92, 124, 164, 192) having a thread (50, 52, 96, 132, 168, 196) that is screwably connectable to a complementarily configured thread of the second coupling arrangement, wherein the thread (50, 52, 96, 132, 168, 196) is of a multiple-threaded configuration and the connecting part (38, 51, 92, 124, 164, 192) comprises a clamping element (56, 60, 100, 128, 172, 200) aligned in an in-line relationship with the thread (50, 52, 96, 132, 168, 196) relative to the thread longitudinal axis (63, 134, 202) and releasably clampable against a complementarily configured clamping element of the second coupling arrangement by axially inserting one into the other, wherein a dirt-receiving space (54, 62, 98, 130, 170, 198) is arranged in an axial direction, between the thread (50, 52, 96, 132, 168, 196) and the clamping element (56, 60, 100, 128, 172, 200) and is configured as an annular space (54, 62, 98, 130, 170, 198) that is oriented coaxially with the thread longitudinal axis (63, 134, 202), **characterized in that** the length of the dirt-receiving space (54, 62, 98, 130, 170, 198) in an axial direction is 0.7 times to 1.3 times the length of the thread (50, 52, 96, 132, 168, 196).

2. Coupling arrangement in accordance with claim 1, **characterized in that** the clamping element (56, 60, 100, 128, 172, 200) has an annular face oriented coaxially with the thread longitudinal axis (63, 134, 202), said annular face being clampable against a complementarily configured annular face of the clamping element of the second coupling arrangement.

3. Coupling arrangement in accordance with claim 2, **characterized in that** the annular face is of conical configuration.

4. Coupling arrangement in accordance with claim 3, **characterized in that** the cone angle of the conical annular face is between 2° and 11°, in particular between 5° and 6°.

5. Coupling arrangement in accordance with claim 3 or 4, **characterized in that** the cone angle of the conical annular face is 0.8 times to 1.2 times the lead angle of the thread (50, 52, 96, 132, 168, 196).

6. Coupling arrangement in accordance with any one of the preceding claims, **characterized in that** the thread (50, 52, 96, 132, 168, 196) is of quadruple-thread configuration.

7. Coupling arrangement in accordance with any one of the preceding claims, **characterized in that** the thread (50, 52, 96, 132, 168, 196) is configured in the form of a trapezoidal thread.

8. Coupling arrangement in accordance with any one of the preceding claims, **characterized in that** the thread (50, 52, 96, 132, 168, 196) and the clamping element (56, 60, 100, 128, 172, 200) are connected together in one piece.

9. Coupling arrangement in accordance with any one of the preceding claims, **characterized in that** the connecting part (38, 124) is configured as a union ring (40, 126) that is supported on the plug part (16, 106) for free rotation and at most limited displacement in an axial direction, wherein the thread is configured as an internal thread (50, 132) of the union ring (40, 126) and the clamping element (56, 128) is arranged on the inner side of the union ring (40, 126).

10. Coupling arrangement in accordance with claim 9, **characterized in that** the clamping element is configured as an inner cone (56, 128) of the union ring (40, 126) whose internal diameter decreases with increasing distance from the free end face of the union ring (40, 126).

11. Coupling arrangement in accordance with claim 10, **characterized in that** the inner cone (56, 128) extends to the free end face of the union ring (40, 126).

12. Coupling arrangement in accordance with any one of claims 1 to 8, **characterized in that** the connecting part (51, 92, 164, 192) is connected to the plug part (48, 86, 154, 158) in a rigid manner.

13. Coupling arrangement in accordance with claim 12, **characterized in that** the thread is configured as an external thread (52, 96, 168) and the clamping element (60, 100, 172) is arranged on the outer side of the connecting part (51, 92, 164).

14. Coupling arrangement in accordance with claim 13, **characterized in that** the clamping element is configured as an outer cone (60, 100, 172) whose external diameter increases with increasing distance from the thread (52, 96, 168).

15. Coupling arrangement in accordance with claim 12, **characterized in that** the thread is configured as an internal thread (196) and the clamping element (200) is arranged on the inner side of the connecting part (192).

16. Coupling arrangement in accordance with claim 15, **characterized in that** the clamping element is configured as an inner cone (200) whose internal diameter decreases with increasing distance from the free end face of the connecting part (192).

17. Coupling arrangement in accordance with any one of the preceding claims, **characterized in that** the plug part (86, 154) carries the sealing ring (90, 162) and has, in an axial direction, between the sealing ring (90, 162) and the thread (96, 168), an annular groove (102, 174) in which an O-ring (104, 176) is arranged.

18. Coupling arrangement in accordance with any one of the preceding claims, **characterized in that** the plug part is configured as a nipple (16, 86, 154).

19. Coupling arrangement in accordance with claim 18, **characterized in that** the nipple (16) comprises a first longitudinal section (20) which has the sealing ring (28) arranged therein and which extends from the free end face (18) of the nipple (16) to an enlargement (22) of the nipple (16) which is adjoined by a second longitudinal section (24) of the nipple (16) whose diameter is larger than the diameter of the first longitudinal section (20).

20. Coupling arrangement in accordance with any one of claims 1 to 17, **characterized in that** the plug part is configured as a sleeve (48, 106, 158) that has an internal bore (66, 108, 182).

21. Coupling arrangement in accordance with claim 20, **characterized in that** the connecting part (51) is connected to the sleeve (48) in a rigid manner and surrounds the sleeve (48) in a circumferential direction.

22. Coupling arrangement in accordance with claim 20, **characterized in that** the connecting part (192) is connected to the sleeve (158) in a rigid manner and is oriented coaxially with the sleeve (158).

23. Coupling arrangement in accordance with claim 20, 21 or 22, **characterized in that** the internal bore (66) forms a sealing face (68) against which the sealing ring (28) is capable of being brought into sealing contact and which is adjoined in an axial direction by a guide face (72) whose internal diameter is larger than the internal diameter of the sealing face (68).

24. Screw coupling for liquid conduits of a high-pressure cleaning apparatus, comprising a first coupling arrangement (12, 82, 152) in accordance with claim 18 or 19 and a second coupling arrangement (14, 84, 156) in accordance with any one of claims 20 to 23, wherein the nipple (16, 86, 154) of the first coupling arrangement (12, 82, 152) is insertable into the sleeve (48, 106, 158) of the second coupling arrangement (14, 84, 156), wherein the thread (52, 132, 196) of the second coupling arrangement (14, 84, 156) is of complementary configuration to the thread (50, 96, 168) of the first coupling arrangement (12, 82, 152) and the clamping element (60, 128, 200) of the second coupling arrangement (14, 84, 156) is complementary in configuration to the clamping element (56, 100, 172) of the first coupling arrangement (12, 82, 152) and wherein the two clamping elements (56, 60, 100, 128, 172, 200) are releasably clampable against one another by axially inserting one into the other.

## Revendications

1. Ensemble d'accouplement pour un accouplement à vis (10, 80, 150) destiné à des conduites de liquide d'un dispositif de nettoyage haute pression, dans lequel l'ensemble d'accouplement (12, 14, 82, 84, 152, 156) comprend une pièce enfichable (16, 48, 86, 106, 154, 158) qui peut être reliée par enfichage à une pièce enfichable de conception complémentaire d'un deuxième ensemble d'accouplement de l'accouplement à vis (10, 80, 150) afin d'établir une liaison libérable et étanche au liquide avec interposition d'une bague d'étanchéité (28, 90, 162), ainsi qu'une pièce de liaison (38, 51, 92, 124, 164, 192) avec un filet (50, 52, 96, 132, 168, 196) qui peut être vissé avec un filet de conception complémentaire du deuxième ensemble d'accouplement, dans lequel le filet (50, 52, 96, 132, 168, 196) comprend plusieurs pas et la pièce de liaison (38, 51, 92, 124, 164, 192) présente un élément de serrage (56, 60, 100, 128, 172, 200) agencé en affleurement avec le filet (50, 52, 96, 132, 168, 196) par rapport à l'axe longitudinal de filet (63, 164, 202), qui peut être bloqué de manière desserrable avec un élément de serrage de conception complémentaire du deuxième ensemble d'accouplement par introduction axiale d'un élément dans l'autre, dans lequel un logement collecteur de poussières (54, 62, 98, 130, 170, 198) est agencé dans la direction axiale entre le filet (50, 52, 96, 132, 168, 196) et l'élément de serrage (56, 60, 100, 128, 172, 200), qui est réalisé sous la forme d'un espace annulaire (54, 62, 98, 130, 170, 198) orienté de manière coaxiale par rapport à l'axe longitudinal de filet (63, 134, 202), **caractérisé en ce que** la longueur de l'espace collecteur de poussières (54, 62, 98, 130, 170, 198) atteint dans la direction axiale 0,7 fois à 1,3 fois la longueur du filet (50, 52, 96, 132, 168, 196).

2. Ensemble d'accouplement selon la revendication 1, **caractérisé en ce que** l'élément de serrage (56, 60, 100, 128, 172, 200) présente une surface annulaire orientée de manière coaxiale par rapport à l'axe longitudinal de filet (63, 134, 202), qui peut être bloquée avec une surface annulaire de conception complémentaire de l'élément de serrage du deuxième ensemble d'accouplement.

3. Ensemble d'accouplement selon la revendication 2, **caractérisé en ce que** la surface annulaire est réalisée de manière conique.

4. Ensemble d'accouplement selon la revendication 3, **caractérisé en ce que** l'angle du cône de la surface annulaire conique est compris entre 2° et 11°, en particulier entre 5° et 6°.

5. Ensemble d'accouplement selon la revendication 3 ou 4, **caractérisé en ce que** l'angle du cône de la surface annulaire conique atteint 0,8 fois à 1,2 fois l'angle de pas du filet (50, 52, 96, 132, 168, 196).

6. Ensemble d'accouplement selon l'une quelconque des revendications précédentes, **caractérisé en ce que** le filet (50, 52, 96, 132, 168, 196) présente 4 pas.

7. Ensemble d'accouplement selon l'une quelconque des revendications précédentes, **caractérisé en ce que** le filet (50, 52, 96, 132, 168, 196) est réalisé sous la forme d'un filet trapézoïdal.

8. Ensemble d'accouplement selon l'une quelconque des revendications précédentes, **caractérisé en ce que** le filet (50, 52, 96, 132, 168, 196) et l'élément de serrage (56, 60, 100, 128, 172, 200) sont reliés l'un à l'autre d'une seule pièce.

9. Ensemble d'accouplement selon l'une quelconque des revendications précédentes, **caractérisé en ce que** la pièce de liaison (38, 124) est réalisée sous la forme d'un anneau de raccord (40, 126) qui est monté librement en rotation sur la pièce enfichable (16, 106) et mobile de manière limitée tout au plus dans la direction axiale, dans lequel le filet est réalisé sous la forme d'un filet intérieur (50, 132) de l'anneau de raccord (40, 126) et l'élément de serrage (56, 128) est agencé sur la face intérieure de l'anneau de raccord (40, 126).

10. Ensemble d'accouplement selon la revendication 9, **caractérisé en ce que** l'élément de serrage est réalisé sous la forme d'un cône intérieur (56, 128) de l'anneau de raccord (40, 126), dont le diamètre intérieur diminue à mesure que l'écart avec la face frontale libre de l'anneau de raccord (40, 126) augmente.

11. Ensemble d'accouplement selon la revendication 10, **caractérisé en ce que** le cône intérieur (56, 128) s'étend jusqu'à la face frontale libre de l'anneau de raccord (40, 126).

12. Ensemble d'accouplement selon l'une quelconque des revendications 1 à 8, **caractérisé en ce que** la pièce de liaison (51, 92, 164, 192) est reliée rigidement à la pièce enfichable (48, 86, 154, 158).

13. Ensemble d'accouplement selon la revendication 12, **caractérisé en ce que** le filet est réalisé sous la forme d'un filet extérieur (52, 96, 168) et l'élément de serrage (60, 100, 172) est agencé sur la face extérieure de la pièce de liaison (51, 92, 164) .

14. Ensemble d'accouplement selon la revendication 13, **caractérisé en ce que** l'élément de serrage est réalisé sous la forme d'un cône extérieur (60, 100, 172) dont le diamètre extérieur s'élargit à mesure que l'écart avec le filet (52, 96, 168) augmente.

15. Ensemble d'accouplement selon la revendication 12, **caractérisé en ce que** le filet est réalisé sous la forme d'un filet intérieur (196) et l'élément de serrage (200) est agencé sur la face intérieure de la pièce de liaison (192).

16. Ensemble d'accouplement selon la revendication 15, **caractérisé en ce que** l'élément de serrage est réalisé sous la forme d'un cône intérieur (200) dont le diamètre intérieur diminue à mesure que l'écart avec la face frontale libre de la pièce de liaison (192) augmente.

17. Ensemble d'accouplement selon l'une quelconque des revendications précédentes, **caractérisé en ce que** la pièce enfichable (86, 154) porte la bague d'étanchéité (90, 162) et présente dans la direction axiale entre la bague d'étanchéité (90, 162) et le filet (96, 168) une rainure annulaire (102, 174) dans laquelle est agencé un joint torique (104, 176).

18. Ensemble d'accouplement selon l'une quelconque des revendications précédentes, **caractérisé en ce que** la pièce enfichable est réalisée sous la forme d'un mamelon (16, 86, 154).

19. Ensemble d'accouplement selon la revendication 18, **caractérisé en ce que** le mamelon (16) présente une première section longitudinale (20) dans laquelle la bague d'étanchéité (28) est agencée et qui s'étend de la surface d'extrémité libre (18) du mamelon (16) jusqu'à un élargissement (22) du mamelon (16), dans le prolongement duquel se situe une deuxième section longitudinale (24) du mamelon (16) dont le diamètre est supérieur au diamètre de la première section longitudinale (20).

20. Ensemble d'accouplement selon l'une quelconque des revendications 1 à 17, **caractérisé en ce que** la pièce enfichable est réalisée sous la forme d'un manchon (48, 106, 158) qui présente un trou intérieur (66, 108, 182).

21. Ensemble d'accouplement selon la revendication 20, **caractérisé en ce que** la pièce de liaison (51) est reliée rigidement au manchon (48) et entoure le manchon (48) dans la direction périphérique.

22. Ensemble d'accouplement selon la revendication 20, **caractérisé en ce que** la pièce de liaison (192) est reliée rigidement au manchon (158) et est orientée de manière coaxiale par rapport au manchon (158) .

23. Ensemble d'accouplement selon la revendication 20, 21 ou 22, **caractérisé en ce que** le trou intérieur (66) réalise une surface d'étanchéité (68) contre laquelle la bague d'étanchéité (28) peut s'appliquer de manière étanche et dans le prolongement de laquelle se situe, dans la direction axiale, une surface de guidage (72) dont le diamètre intérieur est supérieur au diamètre intérieur de la surface d'étanchéité (68).

24. Ensemble d'accouplement destiné à des conduites de liquide d'un dispositif de nettoyage haute pression, avec un premier ensemble d'accouplement (12, 82, 152) selon la revendication 18 ou 19 et un deuxième ensemble d'accouplement (14, 84, 156) selon l'une quelconque des revendications 20 à 23, dans lequel le mamelon (16, 86, 154) du premier ensemble d'accouplement (12, 82, 152) peut être introduit dans le manchon (48, 106, 158) du deuxième ensemble d'accouplement (14, 84, 156), dans lequel le filet (52, 132, 196) du deuxième ensemble d'accouplement (14, 84, 156) présente une conception complémentaire de celle du filet (50, 96, 168) du premier ensemble d'accouplement (12, 82, 152) et l'élément de serrage (60, 128, 200) du deuxième ensemble d'accouplement (14, 84, 156) présente une conception complémentaire de celle de l'élément de serrage (56, 100, 172) du premier ensemble d'accouplement (12, 82, 152) et les deux éléments de serrage (56, 60, 100, 128, 172, 200) peuvent être bloqués l'un avec l'autre de manière desserrable par introduction axiale d'un élément dans l'autre.
